(19) Europäisches Patentamt
European Patent Office
Office européen des brevets

(11) EP 0 780 408 B1

(12) EUROPÄISCHE PATENTSCHRIFT

(45) Veröffentlichungstag und Bekanntmachung des Hinweises auf die Patenterteilung:
**14.07.1999 Patentblatt 1999/28**

(51) Int Cl.$^6$: **C08F 246/00**, C08F 220/54, C07B 57/00

(21) Anmeldenummer: **96119045.1**

(22) Anmeldetag: **28.11.1996**

(54) **Chirale stationäre Phasen für die chromatographische Trennung von optischen Isomeren**

Chiral solid-phase for the chromatographic separation of optical isomers

Matière chirale en phase solide pour la séparation chromatographique d'isomères optiques

(84) Benannte Vertragsstaaten:
**AT BE CH DE DK ES FI FR GB GR IE IT LI LU MC NL PT SE**

(30) Priorität: **11.12.1995 DE 19546136**

(43) Veröffentlichungstag der Anmeldung:
**25.06.1997 Patentblatt 1997/26**

(73) Patentinhaber: **BAYER AG**
**51368 Leverkusen (DE)**

(72) Erfinder:
- **Bömer, Bruno, Dr.**
  **deceased (DE)**
- **Grosser, Rolf, Dr.**
  **51373 Leverkusen (DE)**
- **Lange, Walter, Dr.**
  **50733 Köln (DE)**
- **Zweering, Uwe, Dr.**
  **40589 Düsseldorf (DE)**
- **Köhler, Burkhard, Dr.**
  **51373 Leverkusen (DE)**
- **Sirges, Wolfram, Dr.**
  **40597 Düsseldorf (DE)**
- **Grosse-Bley, Michael, Dr.**
  **51061 Köln (DE)**

(56) Entgegenhaltungen:
**EP-A- 0 282 770**
**EP-A- 0 379 917**
**EP-A- 0 545 168**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 780 408 B1

Printed by Jouve, 75001 PARIS (FR)

## Beschreibung

Die Erfindung betrifft chirale trägergebundene Polymere mit verbesserten Eigenschaften, ein Verfahren zur Herstellung dieser Materialien und ihre Verwendung als chirale stationäre Phasen bei der chromatographischen Trennung von optischen Isomeren, insbesondere von Racematen in ihre Enantiomeren.

In den letzten Jahren gewinnt die Trennung von Wirkstoffracematen in ihre optischen Antipoden zunehmend an Bedeutung, da sich gezeigt hat, daß sich die Enantiomere eines chiralen Wirkstoffes häufig in ihren Wirkungen und Nebenwirkungen deutlich unterscheiden.

Neben den klassischen Verfahren zur Racemattrennung wird dabei die chromatographische Racematspaltung immer wichtiger. Es wurde bereits eine Vielzahl von Adsorbentien für die chromatographische Racematspaltung vorgeschlagen. Neben Naturstoffderivaten (häufig auf Basis von Cellulose) haben sich als gute Adsorbentien dabei bislang häufig synthetische Polymere wie optisch aktive polymere (Meth)Acrylamide (Blaschke et al., Chromatogr. Sci., 1988, 40, 170-198) bewährt.

Gut geeignet sind z.B. auch die in EP-A 379 917 beschriebenen polymeren (Meth)Acrylsäurederivate optisch aktiver Amino-Verbindungen.

Wichtig für die praktische Anwendung der chiralen stationären Phasen ist ihre Druckfestigkeit, da zur Erzielung hoher Raum/Zeit-Ausbeuten bei der chromatographischen Racematspaltung hohe Durchflußgeschwindigkeiten erforderlich sind. Bei nicht ausreichender Druckfestigkeit führen diese Durchflußgeschwindigkeiten zu einer Verstopfung der Säulen.

Druckstabile chirale Phasen erhält man, wenn das optisch aktive Material an einem anorganischen Trägermaterial immobilisiert wird. Als anorganische Trägermaterialien werden in der Regel Kieselgele benutzt. Auf diese Kieselgele können die optisch aktiven Polymere beispielsweise aufgezogen werden, indem sie physikalisch adsorbiert oder kovalent fixiert werden. Letzteres kann geschehen, indem die Kieselgeloberfläche mit polymerisierbaren Gruppen belegt wird und anschließend eine Copolymerisation mit den optisch aktiven Monomeren vorgenommen wird (EP 0 282 770).

Nachteile der genannten Verfahren sind die häufig aufwendige Herstellung des oberflächlich mit polymerisierbaren Gruppen belegten Kieselgels sowie insbesondere die oft unbefriedigende Bindungsausbeute der häufig kostbaren Monomere auf dem Trägermaterial. Auch lassen sich nach den genannten Verfahren meist keine Adsorbentien mit hoher Polymerbelegung erhalten, die erwünscht sind, um die Raum/Zeit-Ausbeute durch höhere Beladung bei der Racematspaltung zu steigern.

Bekannt sind außerdem chirale stationäre Phasen, die durch Pfropfung von difunktionellen Vinylverbindungen wie N,N'-Diacryloyl-(1R,2R)-diaminocyclohexan auf mit Mercaptogruppen (SH-Gruppen) belegtes Kieselgel erhalten werden können (B. Galli et al., Chirality 4, 1992, 384 bis 388). Durch die Verwendung difunktioneller Vinylverbindungen sind die so erhaltenen stationären Phasen stark vernetzt und nicht mit solchen auf der Basis von monofunktionellen Monomeren vergleichbar.

Bei chiralen stationären Phasen auf der Basis monofunktioneller Vinylverbindungen war es bislang schwierig, hohe Polymerbelegungen bei möglichst niedrigem Monomerangebot (hohe Fixierausbeute) zu erreichen. Überraschenderweise wurde nun gefunden, daß man solche chiralen stationären Chromatographiephasen mit einer höheren Polymerbelegung dadurch erhalten kann, daß man anorganische Trägermaterialien mit Mercaptogruppen (SH-Gruppen) belegt und diese Trägermaterialien mit optisch aktiven, monofunktionellen Vinylmonomeren, Mischungen aus verschiedenen optisch aktiven, monofunktionellen Vinylmonomeren oder Mischungen von optisch aktiven, monofunktionellen Vinylmonomeren mit nicht optisch aktiven Vinylmonomeren umsetzt.

Gemäß einem ersten Aspekt betrifft die Erfindung daher chirale stationäre Chromatographiephasen umfassend ein anorganisches Trägermaterial und auf monofunktionellen chiralen Vinylmonomeren basierende chirale, lineare Polymergruppen, die über ein Schwefelatom und gegebenenfalls über eine Spacergruppierung mit dem Trägermaterial verbunden sind, wobei die Polymerbelegung 5 bis 40 Gew.-% bezogen auf das Gesamtgewicht beträgt. Bevorzugt beträgt die Polymerbelegung 15 bis 25 Gew.-%.

Die chiralen Polymergruppen leiten sich bevorzugt von optisch aktiven (Meth)Acrylsäurederivaten als optisch aktiven Vinylmonomeren ab. Bevorzugte (Meth)Acrylsäurederivate sind optisch aktive (Meth)Acrylamidmonomere der allgemeinen Formel (I)

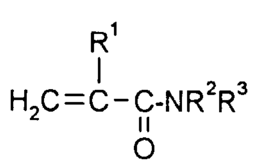

(I),

in welcher

[A]

$R^1$ Wasserstoff oder Methyl, und

$R^2$ eines der Stereoisomere der jeweils acht möglichen stereoisomeren Formen der optisch aktiven Reste der Formeln

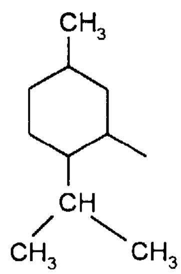

oder

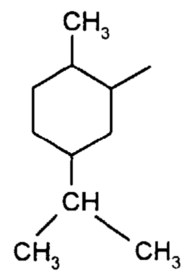

und

$R^3$ Wasserstoff darstellen;

oder in welcher

[B]

$R^1$ die unter [A] angegebene Bedeutung hat,

$R^2$ für einen Rest der Formel (II)

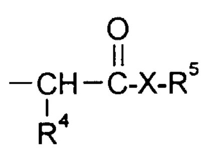

(II)

steht, worin

$R^4$ eine Alkylgruppe mit 1 bis 18 C-Atomen oder eine Cycloalkylgruppe mit 3 bis 8 C-Atomen bedeutet, die gegebenenfalls substituiert sind durch Hydroxy, Halogen, Alkoxy oder Cycloalkyl mit bis zu 8 Kohlenstoffatomen, durch eine Arylgruppe mit bis zu 14 Kohlenstoffatomen oder durch eine Heteroarylgruppe mit 4 bis 14 Kohlenstoffatomen, die 1 oder 2 Heteroatome aus der Gruppe Stickstoff, Sauerstoff oder Schwefel enthält, wobei die genannten Aryl- oder Heteroarylgruppen gegebenenfalls substituiert sind durch Hydroxy, Halogen, Alkyl oder Alkoxy mit jeweils 1 bis 4 C-Atomen,

X Sauerstoff oder eine $NR^6$-Gruppe bedeutet, in der $R^6$ Wasserstoff ist oder für eine Alkylgruppe mit 1 bis 4 C-Atomen steht, oder in der $R^6$ zusammen mit $R^5$ und dem Stickstoffatom einen 5- bis 7-gliedrigen heterocyclischen Ring bildet, der gegebenenfalls mit einer COO-Alkylgruppe (1 bis 4 C-Atome) oder durch 1 oder 2 Alkylgruppen (jeweils 1 bis 4 C-Atome) substituiert ist, und

$R^5$ einen sperrigen stark raumerfüllenden Kohlenwasserstoffrest mit bis zu 30 Kohlenstoffatomen oder einen Heteroarylrest mit 4 bis 14 Kohlenstoffatomen bedeutet, der 1 Heteroatom aus der Gruppe Stickstoff, Sauerstoff oder Schwefel enthält, wobei die genannten Kohlenwasserstoff- und Heteroarylreste gegebenenfalls substituiert sind durch Halogen, Hydroxy, Alkyl und/oder Alkoxy mit jeweils 1 bis 8 Kohlenstoffatomen mit der

Maßgabe, daß wenn $R^5$ eine tertiäre Butylgruppe ist oder X für den Rest $NR^6$ steht, $R^1$ eine Methylgruppe sein muß,

und

$R^3$ Wasserstoff bedeutet oder zusammen mit $R^4$ eine Tri- oder Tetramethylengruppe bedeutet,

oder in welcher

[C]

$R^1$ für Fluor steht,

$R^2$ für einen Rest der unter [B] angegebenen Formel (II) steht, worin

$R^4$ für einen geradkettigen oder verzweigten $C_1$-$C_8$-Alkyl-, einen $C_7$-$C_{12}$-Aralkyl-, einen $C_3$-$C_{10}$-Cycloalkyl-, einen $C_6$-$C_{14}$-Aryl- oder einen Furyl-, Thienyl- oder Pyridylrest steht, die gegebenenfalls durch Benzyloxycarbonyl, Alkoxycarbonyl mit bis zu 6 C-Atomen, Hydroxyl, Alkyl, Cycloalkyl oder Alkoxy mit jeweils bis zu 6 C-Atomen, Halogen, Phenoxy, Benzoxy, Acylamino mit bis zu 8 C-Atomen oder durch Carbonylalkoxy mit bis zu 6 C-Atomen substituiert sind,

X Sauerstoff oder eine $NR^6$-Gruppe bedeutet, in der

$R^6$ für Wasserstoff oder geradkettiges oder verzweigtes $C_1$-$C_4$-Alkyl steht oder zusammen mit $R^5$ und dem Stickstoffatom einen 5- bis 7-gliedrigen Ring bildet, der gegebenenfalls durch eine Alkoxycarbonylgruppe mit bis zu 6 Kohlenstoffatomen oder durch ein oder zwei Alkylgruppen mit je 1 bis 4 Kohlenstoffatomen substituiert ist,

$R^5$ einen geradkettigen oder verzweigten $C_1$-$C_{22}$-Alkyl-, $C_7$-$C_{12}$-Aralkyl-, $C_3$-$C_{10}$-Cycloalkyl-, $C_6$-$C_{14}$-Aryl- oder einen Terpenylrest darstellt, die gegebenenfalls substituiert sind durch Halogen, Alkyl oder Alkoxy mit jeweils 1 bis 4 C-Atomen,

und

$R^3$ für Wasserstoff oder $C_1$-$C_4$-Alkyl steht oder zusammen mit $R^1$ eine Tri- oder Tetramethylengruppe bildet,

oder in welcher

[D]

$R^1$ für Wasserstoff, Methyl oder Fluor steht,

$R^2$ für einen Rest der unter [B] angegebenen Formel (II) steht, worin

$R^4$ für einen Rest der allgemeinen Formel (III)
$-A-S(O)_n-R^7$ steht, worin

n die Zahl 0 bedeutet,

$R^7$ für Alkyl mit bis zu 8 C-Atomen, Phenyl oder

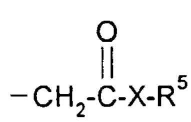

steht oder zusammen mit $R^3$ eine dort beschriebene Brücke bildet und

A für eine Methylen- oder eine Dimethylengruppe steht,

$R^5$ für einen $C_{10}$-Terpenylrest, einen Adamantylrest oder einen Decahydronaphthylrest steht oder für einen Alkylrest oder Cycloalkylrest mit jeweils bis zu 12 C-Atomen mit der Ausnahme von Methyl und Ethyl steht, der gegebenenfalls ein- oder zweifach substituiert ist durch $C_6$-$C_{10}$-Aryl, $C_1$-$C_4$-Alkoxy, $C_3$-$C_{12}$-Cycloalkyl oder Halogen, wobei die genannten Aryl- und Cycloalkylreste ihrerseits wieder durch $C_1$-$C_4$-Alkyl substituiert sein können,

X Sauerstoff oder eine $NR^6$-Gruppe bedeutet, in der $R^6$ für Wasserstoff oder $C_1$-$C_4$-Alkyl steht oder zusammen mit $R^5$ einen stickstoffhaltigen 5- bis 7-gliedrigen Ring bildet, der gegebenenfalls ein- oder zweifach $C_1$-$C_4$-alkyl- oder $C_1$-$C_6$-alkoxycarbonylsubstituiert sein kann,

und

$R^3$ Wasserstoff oder Methyl bedeutet oder zusammen mit $R^7$ eine Methylengruppe, die ein- oder zweifach Methyl- oder einfach tertiär-Butyl-substituiert sein kann, oder eine Dimethylengruppe bildet,

oder in welcher

[E]

$R^1$ für Wasserstoff, Methyl oder Fluor steht,

$R^2$ für einen Rest der unter [B] angegebenen Formel (II) steht, worin

$R^4$ für den unter [D] angegebenen Rest der Formel (III) steht, worin

n die Zahl 1 oder 2 bedeutet,

$R^7$ für einen geradkettigen, verzweigten oder cyclischen Alkylrest mit bis zu 10 C-Atomen, $C_6$-$C_{14}$-Aryl,

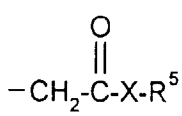

,

$C_2$-$C_{10}$-Acyl, gegebenenfalls substituiertes Benzoyl oder Benzyl steht oder zusammen mit $R^3$ eine dort beschriebene Brücke bildet,

A für eine gegebenenfalls ein- oder zweifach $C_1$-$C_4$-alkylsubstituierte Methylen- oder Dimethylengruppe steht,

$R^5$ für einen geradkettigen, verzweigten oder cyclischen Alkylrest mit bis zu 20 C-Atomen steht, der gegebenenfalls ein- bis dreifach substituiert ist durch Halogen, Alkoxy mit 1 bis 4 C-Atomen, Aralkoxy mit 7 bis 16 C-Atomen oder Aryl mit 6 bis 10 C-Atomen,

X die oben unter [D] angegebene Bedeutung hat,

und

$R^3$ für Wasserstoff oder $C_1$-$C_4$-Alkyl steht oder zusammen mit $R^7$ eine Methylengruppe oder eine Dimethylengruppe bildet, die ein- oder zweifach mit $C_1$-$C_4$-Alkyl substituiert sein können,

oder in welcher

[F]

$R^1$ für Wasserstoff, Methyl oder Fluor steht,

$R^2$ für einen Rest der unter [B] angegebenen Formel (II) steht, worin

$R^4$ für $C_1$-$C_5$-Alkyl, $CH_2$-O-A, $CH_2$-S-A, $(CH_2)_2$-S-$CH_3$, $CH_2$-Cyclohexyl, Cyclohexyl, Phenyl, Benzyl, 4-A-O-Benzyl, $CH_2$-Benzyl, Indolyl, $CH_2$-Naphthyl oder Naphthyl steht, wobei A Wasserstoff, Methyl, t-Butyl oder Benzyl ist,

X für -NH- steht und

$R^5$ für einen Rest der allgemeinen Formel (IV)

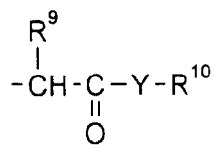

steht, worin

$R^9$ die für $R^4$ angegebenen Bedeutungen haben kann und mit diesem gleich oder verschieden ist,

Y für Sauerstoff oder $NR^6$ steht, wobei $R^6$ Wasserstoff, Methyl oder Ethyl ist oder zusammen mit $R^{10}$ einen $C_5$-$C_6$-Cycloalkylrest bildet und

$R^{10}$ für einen geradkettigen oder verzweigten $C_3$-$C_{18}$-Alkyl- oder einen ein- bis vierfach $C_1$-$C_4$-alkyl-substituierten $C_3$-$C_{12}$-Cycloalkylrest, Benzyl, 1-Phenylethyl oder für ein- oder zweifach durch Fluor, Chlor, Trifluormethyl, Methoxy oder $C_1$-$C_4$-alkylsubstituiertes Phenyl steht und

$R^3$ für Wasserstoff steht.

Von diesen (Meth)Acrylamidmonomeren besonders bevorzugt sind Verbindungen der Formel (I) gemäß [A], wobei

$R^1$ Wasserstoff oder Methyl, und

$R^2$ eines der Stereoisomere der jeweils acht möglichen stereoisomeren Formen der optisch aktiven Reste der Formel

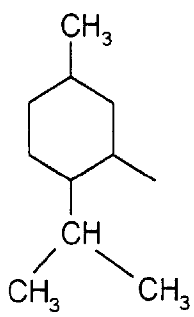

und

$R^3$ Wasserstoff darstellen;

oder gemäß [B], [C], [D] und [E],
welche die Aminosäuresequenz der optisch aktiven Aminosäuren Alanin, Aminobuttersäure, Valin, Norvalin, Leucin,

Isoleucin, Terleucin, Phenylglycin, Naphthylglycin, Phenylalanin, Thienylalanin, Pyridylalanin, Naphthylalanin, Cyclohexylglycin, Cyclohexylalanin, Tyrosin, Tryptophan, Serin, Asparaginsäure, Glutaminsäure, Ornithin, Lysin, Prolin oder 6-Aminopenicillansäure enthalten

oder die Aminosäuresequenz der optisch aktiven schwefelhaltigen Aminosäuren Cystein, Homocystein, Penicillamin, Methionin enthalten, deren SH-Funktion gegebenenfalls zum ersten alkyliert, aryliert, alkoxycarbonylmethyliert oder über eine Alkylenbrücke mit der Aminogruppe verbunden ist und zweitens gegebenenfalls zum Sulfoxid oder Sulfon oxidiert ist

oder gemäß

[F] welche Dipeptideinheiten enthalten, die sich von den Aminosäuren Alanin, Aminobuttersäure, Valin, Norvalin, Leucin, Isoleucin, Terleucin, Norleucin, Neopentylglycin, Serin, Cystein, Methionin, Hexahydrophenylalanin, Hexahydrophenylglycin, Phenylglycin, Phenylalanin, Tyrosin, Homophenylalanin, Tryptophan, Naphthylalanin oder Naphthylglycin ableiten.

Die bevorzugten (Meth)Acrylsäurederivate sind in EP 0 218 089, EP 0 379 917, EP 0 464 488, EP 0 520 242, EP 0 576 949 und EP 0 584 664 beschrieben.

Im Rahmen dieser Erfindung umfaßt der Begriff "auf monofunktionellen chiralen Vinylmonomeren basierende chirale lineare Polymergruppen" auch Copolymere aus verschiedenen monofunktionellen chiralen Vinylmonomeren oder aus achiralen und chiralen Vinylmonomeren.

Geeignete anorganische Trägermaterialien tragen an der Partikeloberfläche Hydroxy- oder Aminogruppen. Bevorzugt sind Kieselgele als Trägermaterialien. Die Partikelgröße der Kieselgele liegt zwischen 1 und 100 µm, bevorzugt sind Partikelgrößen zwischen 5 und 50 µm.

Gemäß einem weiteren Aspekt betrifft die vorliegende Erfindung ein Verfahren zur Herstellung der erfindungsgemäßen chiralen stationären Phasen für die chromatographische Trennung von optischen Isomeren durch Belegung von anorganischen Trägermaterialien mit Mercaptogruppen (SH-Gruppen) und anschließende Umsetzung des resultierenden Materials mit optisch aktiven monofunktionellen Vinylmonomeren, Mischungen aus verschiedenen optisch aktiven monofunktionellen Vinylmonomeren oder Mischungen von optisch aktiven monofunktionellen Vinylmonomeren mit nicht optisch aktiven Vinylmonomeren.

Die in Frage kommenden Vinylmonomere und Trägermaterialien wurden bereits weiter oben näher beschrieben.

Die an der Oberfläche mit SH-Einheiten modifizierten anorganischen Trägermaterialien erhält man zweckmäßigerweise dadurch, daß das Ausgangsmaterial mit einer Verbindung umgesetzt wird, die mindestens eine Mercaptogruppe enthält. Geeignete Derivatisierungsreagenzien sind im Prinzip (V.R. Meyer, Praxis der Hochleistungsflüssigchromatographie, Salle + Sauerländer, 6. Aufl. 1990, S 79 ff. und dort zitierte Literatur) bekannt; sie haben die allgemeine Form Q-L-SH, wobei Q für eine reaktive Gruppe steht, die mit den $NH_2$- oder OH-Gruppen des Trägermaterials reagieren kann und L für eine unter den entsprechenden Bedingungen inerte Spacergruppe steht, die für den notwendigen Abstand zwischen Trägermaterial und SH-Gruppe sorgt.

Bevorzugt erfolgt die Belegung von Kieselgelen durch Umsetzung eines nicht modifizierten Kieselgels mit einem Silan der Form $Z_1Z_2Z_3$Si-L-SH, wobei $Z_1$, $Z_2$ und $Z_3$ unabhängig voneinander für Niedrigalkyl, Halogen, Niedrigalkoxyl- oder Hydroxyl stehen und L für eine gegebenenfalls substituierte Alkylenkette mit bis zu 7 Kohlenstoffatomen steht.

Die Umsetzung kann basenkatalysiert oder im sauren Medium erfolgen. Üblicherweise wird das Kieselgel im Verhältnis Funktionalisierungsreagenz zu Kieselgel 1:200 bis 1:1 umgesetzt, insbesondere liegt das Verhältnis zwischen 1:100 und 1:2. Es resultieren Kieselgele, die 0,1 % bis 5 %, besonders bevorzugt 0,5 % bis 3 % Schwefel in Form von SH-Gruppen enthalten.

Die Polymerisationen können in Abwesenheit von Lösungsmitteln oder in Gegenwart von Lösungsmitteln oder von Fällungsmitteln für das jeweilige Polymer durchgeführt werden. Als Radikalstarter kommen die dem Fachmann bekannten Radikalbildner in Frage. Besonders bevorzugt sind Peroxide wie beispielsweise Dibenzoylperoxid, Dilauroylperoxid oder Diorthotolylperoxid oder Azoverbindungen wie beispielsweise Azobisisobuttersäurenitril (AIBN). Auch Gemische verschiedener Radikalbildner können verwendet werden.

Nach der Polymerisation der optisch aktiven Vinylmonomere in Gegenwart des SH-Gruppen tragenden Trägermaterials werden die erhaltenen polymermodifizierten Materialien intensiv mit Lösungsmitteln für das Polymer gewaschen und getrocknet.

Das beschriebene Verfahren zur Herstellung der erfindungsgemäßen chiralen Chromatographiephasen hat im Vergleich zu herkömmlichen Verfahren den Vorteil, daß die Verknüpfung der Monomere mit dem Trägermaterial mit einer hohen Bindungsausbeute verläuft. Dies ist besonders bei aufwendig herzustellenden Monomeren von Vorteil.

Die Erfindung betrifft ferner den Einsatz der erfindungsgemäßen chiralen stationären Phasen zur Trennung von optischen Isomeren, insbesondere von racemischen Gemischen in die optischen Antipoden. Die Zusammensetzung des Fließmittels kann je nach Art und Eigenschaft des zu trennenden Racemates in üblicher Weise ausgewählt und optimiert werden.

Die Fähigkeit der Materialien zur Racematspaltung wird durch die Kapazitätsverhältnisse k'(1) und k'(2) für die Enantiomere 1 und 2 und den daraus resultierenden Enantioselektivitätswert α ausgedrückt.

$$\alpha = k'(2)/k'(1)$$

Die Erfindung wird durch die folgenden Beispiele illustriert.

**Beispiel I**

300 g Kieselgel (Polygosil 100, 10 µ der Firma Macherey & Nagel) werden 3 h bei 130°C im Hochvakuum getrocknet. Dann gibt man das Kieselgel zu 3000 ml trockenem Toluol und fügt 9,0 g p-Toluolsulfonsäure, 2,4 ml entmineralisiertes Wasser und 30,0 g 3-Mercaptopropyltrimethoxysilan zu. Es wird 8 Stunden unter Stickstoff zum Rückfluß erhitzt. Dann saugt man über eine Fritte ab, rührt mit Methylenchlorid, Methanol/Methylenchlorid (1:1) sowie noch zweimal Methylenchlorid aus, wobei zwischendurch jeweils gut trockengesaugt wird, und trocknet schließlich 2 Stunden im Hochvakuum.

| | |
|---|---|
| Elementaranalyse: | C: 3,3 % |
| | H: 0,9 % |
| | N: > 0,2 % |
| | S: 1,6 % |

**Beispiel 1**

3,0 g des modifizierten Kieselgels aus Beispiel I werden in einem 100 ml Dreihalskolben unter Stickstoffatmosphäre vorgelegt. Nun gibt man 1,2 g N-Methacryloyl-L-phenylalanin-l-menthylamid, 12,0 ml trockenes Toluol sowie 0,02 g Azobisisobuttersäurenitril zu. Die Apparatur wird durch dreimaliges abwechselndes Evakuieren und Füllen mit Stickstoff von Sauerstoff befreit und anschließend mit Stickstoff gefüllt.

Man polymerisiert 12 Stunden bei 60°C und fügt dann 0,2 g 2,6-Di-tert.-butyl-4-methylphenol und 3,0 ml Bistrimethylsilylacetamid zu und erhitzt 4 Stunden zum Rückfluß.

Schließlich wird über eine Fritte (G4) abgesaugt und mit Methylenchlorid, Methanol/Methylenchlorid (1:1), Toluol, Isopropanol und nochmals Methylenchlorid ausgerührt und zwischendurch jeweils abgesaugt. Das Kieselgel wird bei Raumtemperatur im Vakuum getrocknet.

Die Elementaranalyse liefert folgende Ergebnisse:

C: 19,5 %,
H: 2,7 %,
N: 1,6 %.

**Beispiele 2 bis 4**

Die Beispiele 2 bis 4 wurden in der gleichen Art und Weise wie Beispiel 1 durchgeführt. Allerdings wurde das in der nachfolgenden Tabelle genannte Monomer eingesetzt.

| Beispiel | Monomer | Elementaranalyse | | |
|---|---|---|---|---|
| | | C | H | N |
| 2 | N-Methacryloyl-L-leucin-1-menthylamid | 17,6 | 2,9 | 1,7 |
| 3 | N-Methacryloyl-L-methionin-1-menthylamid | 16,7 | 2,7 | 1,5 |
| 4 | (+)-Camphansäure-4-vinylanilid | 20,0 | 2,5 | 1,1 |

Die Eignung der erfindungsgemäßen chiralen stationären Phasen sei durch folgende Trennbeispiele illustriert:

| Beispiel | Racemat | α-Wert | $k_1'$ | Eluent (n-Heptan/THF) |
|---|---|---|---|---|
| 1 | Oxazepam | 2,72 | 0,14 | 1:4 |

(fortgesetzt)

| Beispiel | Racemat | α-Wert | $k_1$' | Eluent (n-Heptan/THF) |
|---|---|---|---|---|
| | Chlormezanon | 1,45 | 0,92 | 1:1 |
| | Mandelsäure | 1,32 | 2,14 | 1:1 |
| 2 | Oxazepam | 1,85 | 0,67 | 1:4 |
| | Chlorthalidon | 1,90 | 0,93 | 1:4 |
| | Chlormezanon | 1,92 | 1,69 | 1:1 |
| 3 | Oxazepam | 2,69 | 0,73 | 1:4 |
| | Chlorthalidon | 2,43 | 0,41 | 1:4 |
| | Mandelsäureamid | 1,45 | 1,27 | 1:4 |
| 4 | N-Benzoyl-2-tert.-butyl-5-oxazolidon | 1,1 | 4,10 | n-Heptan/Isopropanol (10:1) |

Die an den erfindungsgemäßen Kieselgelen gebundenen Polymerisate wurden in Stahlsäulen (Innendurchmesser: 4 mm; Länge: 25 cm) unter HPLC-Bedingungen eingesetzt. Eluiert wurde mit n-Heptan/Tetrahydrofurangemischen (z.B. 1:1 bzw. 1:4 v/v) bei einem Fluß von 1 ml/min.

## Patentansprüche

1. Chirale trägergebundene Polymere umfassend ein anorganisches Trägermaterial und auf monofunktionellen chiralen Vinylmonomeren basierende chirale lineare Polymergruppen, die über ein Schwefelatom und gegebenenfalls über eine Spacergruppierung mit dem Trägermaterial verbunden sind, wobei die Polymerbelegung 5 bis 40 Gew.-% bezogen auf das Gesamtgewicht beträgt.

2. Chirale trägergebundene Polymere nach Anspruch 1, dadurch gekennzeichnet, daß die monofunktionellen chiralen Vinylmonomere optisch aktive (Meth)Acrylsäurederivate sind.

3. Chirale trägergebundene Polymere nach Anspruch 2, dadurch gekennzeichnet, daß es sich bei den monofunktionellen chiralen Vinylmonomeren um optisch aktive (Meth)Acrylamidmonomere der allgemeinen Formel (I)

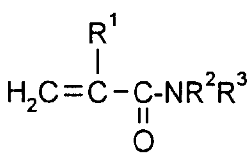

(I),

handelt, in welcher

[A]

$R^1$ Wasserstoff oder Methyl, und

$R^2$ eines der Stereoisomere der jeweils acht möglichen stereoisomeren Formen der optisch aktiven Reste der Formeln

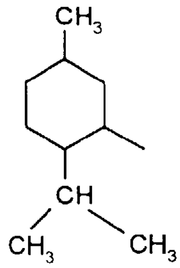

oder

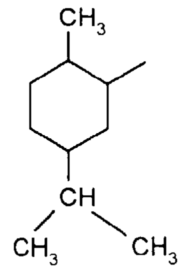

und

$R^3$ Wasserstoff darstellen;

oder in welcher

[B]

$R^1$ die unter [A] angegebene Bedeutung hat,

$R^2$ für einen Rest der Formel (II)

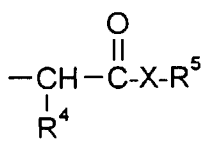

(II)

steht, worin

$R^4$ eine Alkylgruppe mit 1 bis 18 C-Atomen oder eine Cycloalkylgruppe mit 3 bis 8 C-Atomen bedeutet, die gegebenenfalls substituiert sind durch Hydroxy, Halogen, Alkoxy oder Cycloalkyl mit bis zu 8 Kohlenstoffatomen, durch eine Arylgruppe mit bis zu 14 Kohlenstoffatomen oder durch eine Heteroarylgruppe mit 4 bis 14 Kohlenstoffatomen, die 1 oder 2 Heteroatome aus der Gruppe Stickstoff, Sauerstoff oder Schwefel enthält, wobei die genannten Aryl- oder Heteroarylgruppen gegebenenfalls substituiert sind durch Hydroxy, Halogen, Alkyl oder Alkoxy mit jeweils 1 bis 4 C-Atomen,

X Sauerstoff oder eine $NR^6$-Gruppe bedeutet, in der $R^6$ Wasserstoff ist oder für eine Alkylgruppe mit 1 bis 4 C-Atomen steht, oder in der $R^6$ zusammen mit $R^5$ und dem Stickstoffatom einen 5- bis 7-gliedrigen heterocyclischen Ring bildet, der gegebenenfalls mit einer COO-Alkylgruppe (1 bis 4 C-Atome) oder durch 1 oder 2 Alkylgruppen (jeweils 1 bis 4 C-Atome) substituiert ist, und

$R^5$ einen sperrigen stark raumerfüllenden Kohlenwasserstoffrest mit bis zu 30 Kohlenstoffatomen oder einen Heteroarylrest mit 4 bis 14 Kohlenstoffatomen bedeutet, der 1 Heteroatom aus der Gruppe Stickstoff, Sauerstoff oder Schwefel enthält, wobei die genannten Kohlenwasserstoff- und Heteroarylreste gegebenenfalls substituiert sind durch Halogen, Hydroxy, Alkyl und/oder Alkoxy mit jeweils 1 bis 8 Kohlenstoffatomen, mit der Maßgabe, daß, wenn $R^5$ eine tertiäre Butylgruppe ist oder X für den Rest $NR^6$ steht, $R^1$ eine Methylgruppe sein muß,

und

$R^3$ Wasserstoff bedeutet oder zusammen mit $R^4$ eine Tri- oder Tetramethylengruppe bedeutet,

oder in welcher

[C]

$R^1$ für Fluor steht,

$R^2$ für einen Rest der unter [B] angegebenen Formel (II) steht, worin

$R^4$ für einen geradkettigen oder verzweigten $C_1$-$C_8$-Alkyl-, einen $C_7$-$C_{12}$-Aralkyl-, einen $C_3$-$C_{10}$-Cycloalkyl-, einen $C_6$-$C_{14}$-Aryl- oder einen Furyl-, Thienyl- oder Pyridylrest steht, die gegebenenfalls durch Benzyloxycarbonyl, Alkoxycarbonyl mit bis zu 6 C-Atomen, Hydroxyl, Alkyl, Cycloalkyl oder Alkoxy mit jeweils bis zu 6 C-Atomen, Halogen, Phenoxy, Benzoxy, Acylamino mit bis zu 8 C-Atomen oder durch Carbonylalkoxy mit bis zu 6 C-Atomen substituiert sind,

X Sauerstoff oder eine $NR^6$-Gruppe bedeutet, in der

$R^6$ für Wasserstoff oder geradkettiges oder verzweigtes $C_1$-$C_4$-Alkyl steht oder zusammen mit $R^5$ und dem Stickstoffatom einen 5- bis 7-gliedrigen Ring bildet, der gegebenenfalls durch eine Alkoxycarbonylgruppe mit bis zu 6 Kohlenstoffatomen oder durch ein oder zwei Alkylgruppen mit je 1 bis 4 Kohlenstoffatomen substituiert ist,

$R^5$ einen geradkettigen oder verzweigten $C_1$-$C_{22}$-Alkyl-, $C_7$-$C_{12}$-Aralkyl-, $C_3$-$C_{10}$-Cycloalkyl-, $C_6$-$C_{14}$-Aryl- oder einen Terpenylrest darstellt, die gegebenenfalls substituiert sind durch Halogen, Alkyl oder Alkoxy mit jeweils 1 bis 4 C-Atomen,

und

$R^3$ für Wasserstoff oder $C_1$-$C_4$-Alkyl steht oder zusammen mit $R^1$ eine Tri- oder Tetramethylengruppe bildet,

oder in welcher

[D]

$R^1$ für Wasserstoff, Methyl oder Fluor steht,

$R^2$ für einen Rest der unter [B] angegebenen Formel (II) steht, worin

$R^4$ für einen Rest der allgemeinen Formel (III)
$-A-S(O)_n-R^7$ steht, worin

n die Zahl 0 bedeutet,

$R^7$ für Alkyl mit bis zu 8 C-Atomen, Phenyl oder

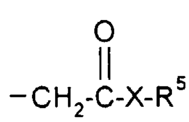

steht oder zusammen mit $R^3$ eine dort beschriebene Brücke bildet und

A für eine Methylen- oder eine Dimethylengruppe steht,

$R^5$ für einen $C_{10}$-Terpenylrest, einen Adamantylrest oder einen Decahydronaphthylrest steht oder für einen Alkylrest oder Cycloalkylrest mit jeweils bis zu 12 C-Atomen mit der Ausnahme von Methyl und Ethyl steht, der gegebenenfalls ein- oder zweifach substituiert ist durch $C_6$-$C_{10}$-Aryl, $C_1$-$C_4$-

Alkoxy, $C_3$-$C_{12}$-Cycloalkyl oder Halogen, wobei die genannten Aryl- und Cycloalkylreste ihrerseits wieder durch $C_1$-$C_4$-Alkyl substituiert sein können,

X Sauerstoff oder eine $NR^6$-Gruppe bedeutet, in der $R^6$ für Wasserstoff oder $C_1$-$C_4$-Alkyl steht oder zusammen mit $R^5$ einen stickstoffhaltigen 5- bis 7-gliedrigen Ring bildet, der gegebenenfalls ein- oder zweifach $C_1$-$C_4$-alkyl- oder $C_1$-$C_6$-alkoxycarbonylsubstituiert sein kann,

und

$R^3$ Wasserstoff oder Methyl bedeutet oder zusammen mit $R^7$ eine Methylengruppe, die ein- oder zweifach Methyl- oder einfach tertiär-Butyl-substituiert sein kann, oder eine Dimethylengruppe bildet,

oder in welcher

[E]

$R^1$ für Wasserstoff, Methyl oder Fluor steht,

$R^2$ für einen Rest der unter [B] angegebenen Formel (II) steht, worin

$R^4$ für den unter [D] angegebenen Rest der Formel (III) steht, worin

n die Zahl 1 oder 2 bedeutet,

$R^7$ für einen geradkettigen, verzweigten oder cyclischen Alkylrest mit bis zu 10 C-Atomen, $C_6$-$C_{14}$-Aryl,

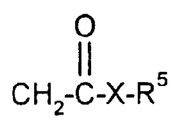
,

$C_2$-$C_{10}$-Acyl, gegebenenfalls substituiertes Benzoyl oder Benzyl steht oder zusammen mit $R^3$ eine dort beschriebene Brücke bildet,

A für eine gegebenenfalls ein- oder zweifach $C_1$-$C_4$-alkylsubstituierte Methylen- oder Dimethylengruppe steht,

$R^5$ für einen geradkettigen, verzweigten oder cyclischen Alkylrest mit bis zu 20 C-Atomen steht, der gegebenenfalls ein- bis dreifach substituiert ist durch Halogen, Alkoxy mit 1 bis 4 C-Atomen, Aralkoxy mit 7 bis 16 C-Atomen oder Aryl mit 6 bis 10 C-Atomen,

X die oben unter [D] angegebene Bedeutung hat

und

$R^3$ für Wasserstoff oder $C_1$-$C_4$-Alkyl steht oder zusammen mit $R^7$ eine Methylengruppe oder eine Dimethylengruppe bildet, die ein- oder zweifach mit $C_1$-$C_4$-Alkyl substituiert sein können,

oder in welcher

[F]

$R^1$ für Wasserstoff, Methyl oder Fluor steht,

$R^2$ für einen Rest der unter [B] angegebenen Formel (II) steht, worin

$R^4$ für $C_1$-$C_5$-Alkyl, $CH_2$-O-A, $CH_2$-S-A, $(CH_2)_2$-S-$CH_3$, $CH_2$-Cyclohexyl, Cyclohexyl, Phenyl, Benzyl, 4-A-O-Benzyl, $CH_2$-Benzyl, Indolyl, $CH_2$-Naphthyl oder Naphthyl steht, wobei A Wassertoff, Methyl, t-Butyl oder Benzyl ist,

X für -NH- steht und

$R^5$ für einen Rest der allgemeinen Formel (IV)

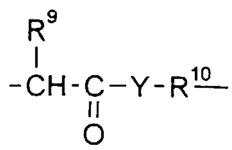

steht, worin

$R^9$ die für $R^4$ angegebenen Bedeutungen haben kann und mit diesem gleich oder verschieden ist,

Y für Sauerstoff oder $NR^6$ steht, wobei $R^6$ Wasserstoff, Methyl oder Ethyl ist oder zusammen mit $R^{10}$ einen $C_5$-$C_6$-Cycloalkylrest bildet und

$R^{10}$ für einen geradkettigen oder verzweigten $C_3$-$C_{18}$-Alkyl- oder einen ein- bis vierfach $C_1$-$C_4$-alkylsubstituierten $C_3$-$C_{12}$-Cycloalkylrest, Benzyl, 1-Phenylethyl oder für ein- oder zweifach durch Fluor, Chlor, Trifluormethyl, Methoxy oder $C_1$-$C_4$-alkylsubstituiertes Phenyl steht und

$R^3$ für Wasserstoff steht.

**4.** Chirale trägergebundene Polymere nach Anspruch 3, dadurch gekennzeichnet, daß es sich bei den monofunktionellen chiralen Vinylmonomeren um optisch aktive (Meth)Acrylamidmonomere der allgemeinen Formel (I) handelt, wobei

[A]

$R^1$ Wasserstoff oder Methyl, und

$R^2$ eines der Stereoisomere der jeweils acht möglichen stereoisomeren Formen des optisch aktiven Restes der Formel

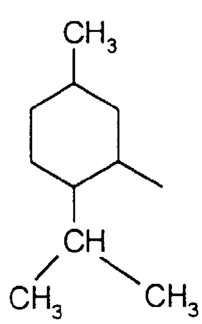

und

$R^3$ Wasserstoff darstellen;

oder wobei

[B], [C], [D], [E]

die (Meth)Acrylamidmonomere die Aminosäuresequenz der optisch aktiven Aminosäuren Alanin, Aminobuttersäure, Valin, Norvalin, Leucin, Isoleucin, Terleucin, Phenylglycin, Naphthylglycin, Phenylalanin, Thienylalanin, Pyridylalanin, Naphthylalanin, Cyclohexylglycin, Cyclohexylalanin, Tyrosin, Tryptophan, Serin, Asparaginsäure, Glutaminsäure, Ornithin, Lysin, Prolin oder 6-Aminopenicillansäure enthalten
oder die Aminosäuresequenz der optisch aktiven schwefelhaltigen Aminosäuren Cystein, Homocystein, Penicillamin, Methionin enthalten, deren SH-Funktion gegebenenfalls zum ersten alkyliert, aryliert, alkoxycarbonylmethyliert oder über eine Alkylenbrücke mit der Aminogruppe verbunden ist und zweitens gegebenenfalls zum Sulfoxid oder Sulfon oxidiert ist
oder wobei

[F]

die (Meth)Acrylamidmonomere Dipeptideinheiten enthalten, die sich von den Aminosäuren Alanin, Aminobuttersäure, Valin, Norvalin, Leucin, Isoleucin, Terleucin, Norleucin, Neopentylglycin, Serin, Cystein, Methionin, Hexahydrophenylalanin, Hexahydrophenylglycin, Phenylglycin, Phenylalanin, Tyrosin, Homophenylalanin, Tryptophan, Naphthylalanin oder Naphthylglycin ableiten.

**5.** Chirale trägergebundene Polymere nach einem der Ansprüche 1 bis 4, dadurch gekennzeichnet, daß die Polymerbelegung 5 bis 40 Gew.-%, bezogen auf das Gesamtgewicht beträgt.

**6.** Chirale trägergebundene Polymere nach einem der Ansprüche 1 bis 5, dadurch gekennzeichnet, daß das anorganische Trägermaterial auf der Oberfläche Hydroxyl- und/oder Aminogruppen trägt.

**7.** Chirale trägergebundene Polymere nach einem der Ansprüche 1 bis 6, dadurch gekennzeichnet, daß das anorganische Trägermaterial ein Kieselgel ist.

**8.** Verfahren zur Herstellung chiraler trägergebundene Polymere durch Belegung von anorganischen Trägermaterialien mit Mercaptogruppen (SH-Gruppen) und anschließende Umsetzung des resultierenden Materials mit optisch aktiven, monofunktionellen Vinylmonomeren, Mischungen aus verschiedenen optisch aktiven, monofunktionellen Vinylmonomeren oder Mischungen von optisch aktiven, monofunktionellen Vinylmonomeren mit nicht optisch aktiven Vinylmonomeren.

**9.** Verwendung der chiralen trägergebundene Polymere nach einem der Ansprüche 1 bis 7 zur Trennung von Gemischen optischer Isomere.

## Claims

**1.** Chiral polymers which are bonded to a support and comprise an inorganic support material and chiral linear polymer groups which are based on monofunctional chiral vinyl monomers and are bonded to the support material via a sulphur atom and, if appropriate, via a spacer grouping, the polymer coating being 5 to 40% by weight, based on the total weight.

**2.** Chiral polymers bonded to a support according to Claim 1, characterized in that the monofunctional chiral vinyl monomers are optically active (meth)acrylic acid derivatives.

**3.** Chiral polymers bonded to a support according to Claim 2, characterized in that the monofunctional chiral vinyl monomers are optically active (meth)acrylamide monomers of the general formula (I)

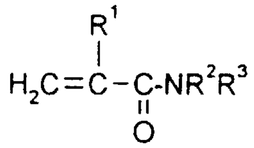

(I),

in which

[A]

$R^1$ represents hydrogen or methyl and

$R^2$ represents one of the stereoisomers of the eight particular possible stereoisomeric forms of the optically active radicals of the formulae

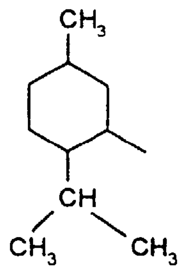

or

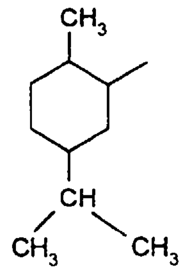

and

$R^3$ represents hydrogen;

or in which

[B]

$R^1$ has the meaning given under [A],

$R^2$ represents a radical of the formula (II)

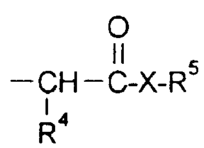

(II)

wherein

$R^4$ denotes an alkyl group having 1 to 18 C atoms or a cycloalkyl group having 3 to 8 C atoms, which are optionally substituted by hydroxyl, halogen, alkoxy or cycloalkyl having up to 8 carbon atoms, by an aryl group having up to 14 carbon atoms or by a heteroaryl group having 4 to 14 carbon atoms, which contains 1 or 2 heteroatoms from the group consisting of nitrogen, oxygen and sulphur, where the aryl or heteroaryl groups mentioned are optionally substituted by hydroxyl, halogen, alkyl or alkoxy having in each case 1 to 4 C atoms,

X denotes oxygen or an $NR^6$ group, in which $R^6$ is hydrogen or represents an alkyl group having 1 to 4 C atoms, or in which $R^6$ together with $R^5$ and the nitrogen atom, forms a 5- to 7-membered heterocyclic ring, which is optionally substituted by a COO-alkyl group (1 to 4 C atoms) or by 1 or 2 alkyl groups (in each case 1 to 4 C atoms), and

$R^5$ denotes a bulky hydrocarbon radical which occupies a large space and has up to 30 carbon atoms or a heteroaryl radical having 4 to 14 carbon atoms, which contains 1 heteroatom from the group consisting of nitrogen, oxygen and sulphur, where the hydrocarbon and heteroaryl radicals mentioned are optionally substituted by halogen, hydroxyl, alkyl and/or alkoxy having in each case 1 to 8 carbon atoms, with the

proviso that when $R^5$ is a tertiary butyl group or X represents the radical $NR^6$, $R^1$ must be a methyl group,

and

$R^3$ denotes hydrogen or, together with $R^4$, denotes a tri- or tetramethylene group,

or in which

[C]

$R^1$ represents fluorine,

$R^2$ represents a radical of the formula (II) given under [B], wherein

$R^4$ represents a straight-chain or branched $C_1$-$C_8$-alkyl, a $C_7$-$C_{12}$-aralkyl, a $C_3$-$C_{10}$-cycloalkyl, a $C_6$-$C_{14}$-aryl or a furyl, thienyl or pyridyl radical, each of which is optionally substituted by benzyloxycarbonyl, alkoxycarbonyl having up to 6 C atoms, hydroxyl, alkyl, cycloalkyl or alkoxy having in each case up to 6 C atoms, halogen, phenoxy, benzoxy, acylamino having up to 8 C atoms or by carbonylalkoxy having up to 6 C atoms,

X denotes oxygen or an $NR^6$ group, in which

$R^6$ represents hydrogen or straight-chain or branched $C_1$-$C_4$-alkyl or, together with $R^5$ and the nitrogen atom, forms a 5- to 7-membered ring, which is optionally substituted by an alkoxycarbonyl group having up to 6 carbon atoms or by one or two alkyl groups each having 1 to 4 carbon atoms,

$R^5$ represents a straight-chain or branched $C_1$-$C_{22}$-alkyl, $C_7$-$C_{12}$-aralkyl, $C_3$-$C_{10}$-cycloalkyl, $C_6$-$C_{14}$-aryl or a terpenyl radical, each of which is optionally substituted by halogen, alkyl or alkoxy having in each case 1 to 4 C atoms,

and

$R^3$ represents hydrogen or $C_1$-$C_4$-alkyl or, together with $R^1$, forms a tri- or tetramethylene group,

or in which

[D]

$R^1$ represents hydrogen, methyl or fluorine,

$R^2$ represents a radical of the formula (II) given under [B], wherein

$R^4$ represents a radical of the general formula (III)
-A-S(O)$_n$-$R^7$, wherein

n denotes the number 0,

$R^7$ represents alkyl having up to 8 C atoms, phenyl or

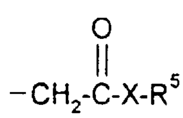

or, together with $R^3$, forms a bridge described there and

A represents a methylene or a dimethylene group,

$R^5$ represents a $C_{10}$-terpenyl radical, an adamantyl radical or a decahydronaphthyl radical, or represents an alkyl radical or cycloalkyl radical having in each case up to 12 C atoms, with the exception of methyl and ethyl, which is optionally mono- or disubstituted by $C_6$-$C_{10}$-aryl, $C_1$-$C_4$-alkoxy, $C_3$-$C_{12}$-cycloalkyl or halogen, where the aryl and cycloalkyl radicals mentioned can in turn can again be substituted by $C_1$-$C_4$-alkyl,

X denotes oxygen or an $NR^6$ group, in which $R^6$ represents hydrogen or $C_1$-$C_4$-alkyl or, together with $R^5$, forms a nitrogen-containing 5- to 7-membered ring, which can optionally be mono- or disubstituted by $C_1$-$C_4$-alkyl or $C_1$-$C_6$-alkoxycarbonyl,

and

$R^3$ denotes hydrogen or methyl or, together with $R^7$, forms a methylene group, which can be mono- or disubstituted by methyl or monosubstituted by tertiary butyl, or a dimethyl group,

or in which

[E]

$R^1$ represents hydrogen, methyl or fluorine,

$R^2$ represents a radical of the formula (II) given under [B], wherein

$R^4$ represents the radical of the formula (III) given under [D], wherein

n denotes the number 1 or 2,

$R^7$ represents a straight-chain, branched or cyclic alkyl radical having up to 10 C atoms, $C_6$-$C_{14}$-aryl,

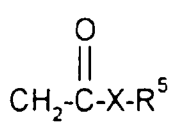

,

$C_2$-$C_{10}$-acyl, optionally substituted benzoyl or benzyl or, together with $R^3$, forms a bridge described there and

A represents a methylene or dimethylene group which is optionally mono- or disubstituted by $C_1$-$C_4$-alkyl,

$R^5$ represents a straight-chain, branched or cyclic alkyl radical having up to 20 C atoms, which is optionally mono- to trisubstituted by halogen, alkoxy having 1 to 4 C atoms, aralkoxy having 7 to 16 C atoms or aryl having 6 to 10 C atoms,

X has the meaning given above under [D],

and

$R^3$ represents hydrogen or $C_1$-$C_4$-alkyl or, together with $R^7$, forms a methylene group or a dimethylene group, which can be mono- or disubstituted by $C_1$-$C_4$-alkyl,

or in which

[F]

$R^1$ represents hydrogen, methyl or fluorine,

$R^2$ represents a radical of the formula (II) given under [B], wherein

$R^4$ represents $C_1$-$C_5$-alkyl, $CH_2$-O-A, $CH_2$-S-A, $(CH_2)_2$-S-$CH_3$, $CH_2$-cyclohexyl, cyclohexyl, phenyl, benzyl, 4-A-O-benzyl, $CH_2$-benzyl, indolyl, $CH_2$-naphthyl or naphthyl, wherein A is hydrogen, methyl, t-butyl or benzyl,

X represents -NH- and

$R^5$ represents a radical of the general formula (IV)

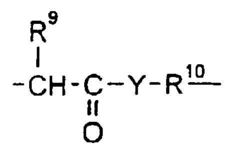

wherein

$R^9$ can have the meanings given for $R^4$ and is identical to or different from this radical,

Y represents oxygen or $NR^6$, wherein $R^6$ is hydrogen, methyl or ethyl, or, together with $R^{10}$, forms a $C_5$-$C_6$-cycloalkyl radical and

$R^{10}$ represents a straight-chain or branched $C_3$-$C_{18}$-alkyl radical or a $C_3$-$C_{12}$-cycloalkyl radical which is mono- to tetrasubstituted by $C_1$-$C_4$-alkyl, or benzyl or 1-phenylethyl, or represents phenyl which is mono- or disubstituted by fluorine, chlorine, trifluoromethyl, methoxy or $C_1$-$C_4$-alkyl and

$R^3$ represents hydrogen.

**4.** Chiral polymers bonded to a support according to Claim 3, characterized in that the monofunctional chiral vinyl monomers are optically active (meth)acrylamide monomers of the general formula (I) wherein

[A]

$R^1$ represents hydrogen or methyl and

$R^2$ represents one of the stereoisomers of the eight particular possible stereoisomeric forms of the optically active radical of the formula

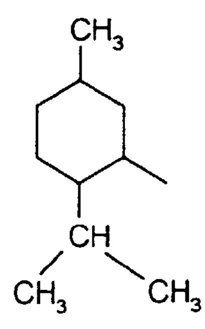

and

$R^3$ represents hydrogen:

or wherein

[B], [C], [D], [E]

the (meth)acrylamide monomers contain the amino acid sequence of the optically active amino acids alanine, aminobutyric acid, valine, norvaline, leucine, isoleucine, terleucine, phenylglycine, naphthylglycine, phenylalanine, thienylalanine, pyridylalanine, naphthylalanine, cyclohexylglycine, cyclohexylalanine, tyrosine, tryptophan, serine, aspartic acid, glutamic acid, ornithine, lysine, proline or 6-aminopenicillanic acid
or the amino acid sequence of the optically active sulphur-containing amino acids cysteine, homocysteine, penicillamine or methionine, the SH function of which is optionally firstly alkylated, arylated, alkoxycarbonylmethylated or bonded to the amino group via an alkylene bridge, and secondly optionally oxidized to the sulphoxide or sulphone,
or wherein

[F]

the (meth)acrylamide monomers contain dipeptide units which are derived from the amino acids alanine, aminobutyric acid, valine, norvaline, leucine, isoleucine, terleucine, norleucine, neopentylglycine, serine, cysteine, methionine, hexahydrophenylalanine, hexahydrophenylglycine, phenylglycine, phenylalanine, tyrosine, homophenylalanine, tryptophan, naphthylalanine or naphthylglycine.

**5.** Chiral polymers bonded to a support according to one of Claims 1 to 4, characterized in that the polymer coating is 5 to 40% by weight, based on the total weight.

**6.** Chiral polymers bonded to a support according to one of Claims 1 to 5, characterized in that the inorganic support material carries hydroxyl and/or amino groups on the surface.

**7.** Chiral polymers bonded to a support according to one of Claims 1 to 6, characterized in that the inorganic support material is a silica gel.

**8.** Process for the preparation of chiral polymers bonded to a support by coating inorganic support materials with mercapto groups (SH groups) and subsequently reacting the resulting material with optically active monofunctional vinyl monomers, mixtures of various optically active monofunctional vinyl monomers or mixtures of optically active monofunctional vinyl monomers with vinyl monomers which are not optically active.

**9.** Use of the chiral polymers bonded to a support according to one of Claims 1 to 7 for the separation of mixtures of optical isomers.

**Revendications**

**1.** Polymère chiral lié à un support, comportant un matériau support inorganique et des radicaux de polymère linéaires chiraux à base de monomères vinyliques chiraux monofonctionnels, qui sont reliés au matériau support par un atome de soufre et facultativement, un groupement d'espacement, où le revêtement de polymère se situe dans l'intervalle allant de 5 à 40% en poids, sur base du poids total.

**2.** Polymère chiral lié à un support suivant la revendication 1, caractérisé en ce que les monomères vinyliques chiraux monofonctionnels sont des dérivés optiquement actifs de l'acide (méth)acrylique.

**3.** Polymère chiral lié à un support suivant la revendication 2, caractérisé en ce que les monomères vinyliques chiraux monofonctionnels consistent en des monomères (méth)acrylamides optiquement actifs de formule générale (I) :

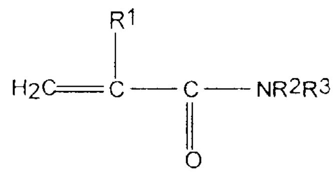

(I)

dans laquelle

[A]

$R^1$ représente hydrogène ou méthyle, et
$R^2$ représente l'un des stéréoisomères de respectivement, les huit formes stéréoisomériques possibles des restes optiquement actifs de formules :

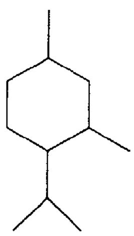

ou

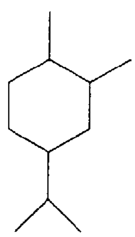

et
$R^3$ représente hydrogène;

ou dans laquelle
[B]

$R^1$ a la signification donnée sous [A],
$R^2$ représente un radical de formule (II) :

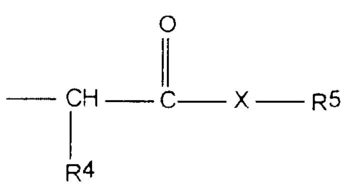

(II)

dans laquelle
$R^4$ représente un radical alcoyle ayant 1 à 18 atomes C ou un radical cycloalcoyle ayant 3 à 8 atomes C, qui sont facultativement substitués par hydroxy, halogène, alcoxy ou cycloalcoyle ayant jusqu'à 8 atomes de carbone, par un radical aryle ayant jusqu'à 4 atomes de carbone ou par un radical hétéroaryle ayant 4 à 14 atomes de carbone, qui contient 1 ou 2 hétéroatomes dans le groupe de l'azote, l'oxygène ou le soufre, où les radicaux aryle et hétéroaryle cités sont facultativement substitués par hydroxy, halogène, alcoyle ou alcoxy ayant chacun 1 à 4 atomes C;
X représente oxygène ou un radical $NR^6$, dans lequel $R^6$ est hydrogène ou représente un radical alcoyle ayant 1 à 4 atomes C, ou dans lequel $R^6$ forme avec $R^5$ et l'atome d'azote, un hétérocycle ayant 5 à 7 membres, qui est facultativement substitué avec un radical COO-alcoyle (1 à 4 atomes C) ou par 1 ou 2 radicaux alcoyle (chacun 1 à 4 atomes C), et
$R^5$ représente un reste hydrocarbure encombré et fortement encombrant ayant jusqu'à 30 atomes de carbone ou un reste hétéroaryle ayant 4 à 14 atomes de carbone, qui contient un hétéroatome parmi le

groupe de l'azote, l'oxygène ou le soufre, où les restes hydrocarbure et héréroaryle cités sont facultativement substitués par halogène, hydroxy, alcoyle et/ou alcoxy ayant chacun 1 à 8 atomes de carbone, avec la condition que lorsque $R^5$ est un radical t-butyle ou X représente le radical $NR^6$, $R^1$ doit être un radical méthyle; et

$R^3$ représente hydrogène ou avec $R^4$, représente un radical tri- ou tétraméthylène;

ou dans laquelle
[C]

$R^1$ représente fluor;
$R^2$ représente un radical de formule (II) reprise sous [B], où
$R^4$ représente un reste alcoyle en $C_1$-$C_8$ linéaire ou ramifié, aralcoyle en $C_7$-$C_{12}$, cycloalcoyle en $C_3$-$C_{10}$, aryle en $C_6$-$C_{14}$ ou un reste furyle, thiényle ou pyridyle, qui sont facultativement substitués par benzyloxycarboxyle, alcoxycarbonyle ayant jusqu'à 6 atomes C, hydroxy, alcoyle, cycloalcoyle ou alcoxy ayant chacun jusqu'à 6 atomes C, halogène, phénoxy, benzoxy, acylamino ayant jusqu'à 8 atomes C ou par carbonylalcoxy ayant jusqu'à 6 atomes C,
X représente oxygène ou un radical $NR^6$, dans lequel
$R^6$ représente hydrogène ou alcoyle en $C_1$-$C_4$ linéaire ou ramifié, ou avec $R^5$ et l'atome d'azote, forme un cycle de 5 à 7 membres, qui est facultativement substitué par un radical alcoxycarbonyle ayant jusqu'à 6 atomes de carbone ou par 1 ou 2 radicaux alcoyle ayant chacun 1 à 4 atomes de carbone,
$R^5$ représente un reste alcoyle en $C_1$-$C_{22}$ linéaire ou ramifié, aralcoyle en $C_7$-$C_{12}$, cycloalcoyle en $C_3$-$C_{10}$, aryle en $C_6$-$C_{14}$ ou terpényle, qui sont facultativement substitués par halogène, alcoyle ou alcoxy ayant chacun 1 à 4 atomes C,
et
$R^3$ représente hydrogène ou alcoyle en $C_1$-$C_4$ ou forme avec $R^1$, un radical tri- ou tétraméthylène, ou dans laquelle [D]
$R^1$ représente hydrogène, méthyle ou fluor;
$R^2$ représente un radical de formule (II) donnée sous [B], où
$R^4$ représente un radical de formule générale (III) :

$$-A-S(O)_n-R^7,$$

où

n représente le nombre 0,
$R^7$ représente alcoyle ayant jusqu'à 8 atomes C, phényle ou

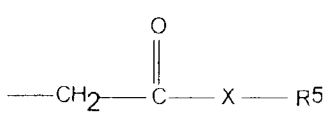

ou forme avec $R^3$, un pont décrit sous [B], et
A représente un radical méthylène ou diméthylène,

$R^5$ représente un reste terpényle en $C_{10}$, un reste adamantyle ou un reste décahydronaphtyle ou représente un reste alcoyle ou un reste cycloalcoyle ayant chacun jusqu'à 12 atomes C, à l'exception de méthyle et éthyle, qui est facultativement substitué une ou deux fois par aryle en $C_6$-$C_{10}$, alcoxy en $C_1$-$C_4$, cycloalcoyle en $C_3$-$C_{12}$ ou halogène, où les restes aryle et cycloalcoyle cités peuvent être substitués à leur tour, à nouveau, par alcoyle en $C_1$-$C_4$;
X représente oxygène ou un radical $NR^6$, dans lequel $R^6$ représente hydrogène ou alcoyle en $C_1$-$C_4$ ou forme avec $R^5$, un cycle azoté ayant de 5 à 7 membres, qui peut être facultativement substitué une ou deux fois par alcoyle en $C_1$-$C_4$ ou alcoxycarbonyle en $C_1$-$C_6$,
et
$R^3$ représente hydrogène ou méthyle ou avec $R^7$, forme un radical méthylène qui peut être substitué une

ou deux fois par méthyle ou une fois par t-butyle, ou un radical diméthylène,

ou dans laquelle
[E]

$R^1$ représente hydrogène, méthyle ou fluor;
$R^2$ représente un radical de formule (II) donnée sous [B], où
$R^4$ représente le reste de formule (III) donnée sous [D], où

n représente le nombre 1 ou 2,
$R^7$ représente un reste alcoyle linéaire, ramifié ou cyclique ayant jusqu'à 10 atomes C, aryle en $C_6$-$C_{14}$,

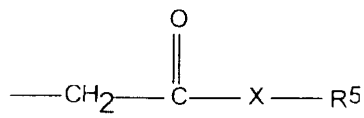

acyle en $C_2$-$C_{10}$, benzoyle ou benzyle facultativement substitué ou forme avec $R^3$, un pont décrit sous [B],
A représente un radical méthylène ou diméthylène facultativement substitué une ou deux fois par alcoyle en $C_1$-$C_4$,
$R^5$ représente un reste alcoyle linéaire, ramifié ou cyclique ayant jusqu'à 20 atomes C, qui est facultativement substitué de une à trois fois, par halogène, alcoxy ayant 1 à 4 atomes C, aralcoxy ayant 7 à 16 atomes C ou aryle ayant 6 à 10 atomes C,
X a la signification donnée ci-dessus sous [D],
et
$R^3$ représente hydrogène ou alcoyle en $C_1$-$C_4$ ou forme avec $R^7$, un radical méthylène ou un radical diméthylène, qui peuvent être substitués une ou deux fois par alcoyle en $C_1$-$C_4$,

ou dans laquelle

[F]

$R^1$ représente hydrogène, méthyle ou fluor;
$R^2$ représente un radical de la formule (II) donnée sous [B], où
$R^4$ représente alcoyle en $C_1$-$C_5$, $CH_2$-O-A, $CH_2$-S-A, $(CH_2)_2$-S-$CH_3$, $CH_2$-cyclohexyle, cyclohexyle, phényle, benzyle, 4-A-O-benzyle, $CH_2$-benzyle, indolyle, $CH_2$-naphtyle ou naphtyle, où A est hydrogène, méthyle, t-butyle ou benzyle;
X représente NH, et
$R^5$ représente un reste de formule générale (IV)

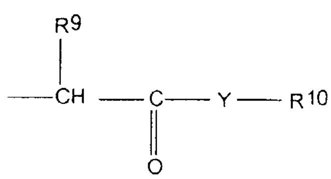

$R^9$ peut avoir la définition donnée pour $R^4$ et est identique ou différent de celui-ci;
Y représente oxygène ou $NR^6$, où $R^6$ est hydrogène, méthyle ou éthyle ou forme avec $R^{10}$, un radical cycloalcoyle en $C_5$-$C_6$, et
$R^{10}$ représente un reste alcoyle en $C_3$-$C_{18}$ linéaire ou ramifié ou un reste cycloalcoyle en $C_3$-$C_{12}$ substitué une à quatre fois par alcoyle en $C_1$-$C_4$, benzyle, 1-phényléthyle ou phényle substitué une ou deux fois par fluor, chlore, trifluorométhyle, méthoxy ou alcoyle en $C_1$-$C_4$, et

$R^3$ représente hydrogène.

**4.** Polymère chiral lié à un support suivant la revendication 3, caractérisé en ce que les monomères vinyliques chiraux monofonctionnels consistent en des monomères (méth)acrylamide optiquement actifs de formule générale (I), où [A]

$R^1$ représente hydrogène ou méthyle, et
$R^2$ représente un stéréoisomère de chacune des huit formes stéréomériques possibles du radical optiquement actif de formule :

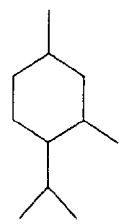

et
$R^3$ représente hydrogène;

ou où [B], [C], [D] et [E]
contiennent la séquence d'aminoacide des acides aminés optiquement actifs alanine, acide aminobutyrique, valine, norvaline, leucine, isoleucine, terleucine, phénylglycine, naphtylglycine, phénylalanine, thiénylalaline, pyridylalanine, naphtylalanine, cyclohexylglycine, cyclohexylalanine, tyrosine, tryptophane, sérine, acide aspartique, acide glutamique, ornithine, lysine, proline ou acide 6-aminopénicillique,
ou contiennent la séquence d'aminoacide des acides aminés soufrés optiquement actifs cystéine, homocystéine, pénicillamine, méthionine, dont la fonction SH est facultativement d'abord alcoylée, arylée ou alcoxycarbonylméthylée ou reliée par un pont alcoylène au radical amino et ensuite, facultativement oxydée en sulfoxyde ou sulfone,
ou où [F]
contient des unités dipeptidiques, qui dérivent des acides aminés alanine, acide aminobutyrique, valine, norvaline, leucine, isoleucine, terleucine, norleucine, néopentylglycine, sérine, cystéine, méthionine, hexahydrophénylalanine, hexahydrophénylglycine, phénylglycine, phénylalanine, tyrosine, homophénylalanine, tryptophane, naphtylalanine, naphtylglycine.

**5.** Polymère chiral lié à un support suivant l'une quelconque des revendications 1 à 4, caractérisé en ce que le revêtement polymère s'élève de 5 à 40% en poids, sur base du poids total.

**6.** Polymère chiral lié à un support suivant l'une quelconque des revendications 1 à 5, caractérisé en ce que le matériau support inorganique porte à la surface, des radicaux hydroxyle et/ou amino.

**7.** Polymère chiral lié à un support suivant l'une quelconque des revendications 1 à 6, caractérisé en ce que le matériau support inorganique est un gel de silice.

**8.** Procédé de préparation du polymère chiral lié à un support par revêtement de matériau support inorganique avec des radicaux mercapto (radicaux SH) et ensuite, réaction du matériau résultant avec des monomères vinyliques monofonctionnels optiquement actifs, des mélanges de différents monomères vinyliques monofonctionnels optiquement actifs ou des mélanges de monomères vinyliques monofonctionnels optiquement actifs avec des monomères vinyliques non optiquement actifs.

**9.** Utilisation du polymère chiral lié à un support suivant l'une quelconque des revendications 1 à 7, pour la séparation de mélanges d'isomères optiques.